Europäisches Patentamt

European Patent Office

Office européen des brevets

(19)

(11) Veröffentlichungsnummer: **0 486 748 A1**

# (12) EUROPÄISCHE PATENTANMELDUNG

(21) Anmeldenummer: **91105364.3**

(22) Anmeldetag: **04.04.91**

(51) Int. Cl.5: **C02F 3/12**, C02F 3/10

(30) Priorität: **22.11.90 DE 9016202 U**

(43) Veröffentlichungstag der Anmeldung:
**27.05.92 Patentblatt 92/22**

(84) Benannte Vertragsstaaten:
**DE DK ES GB NL SE**

(71) Anmelder: **FISCHTECHNIK FREDESLOH, Dr. Gerhard Müller GmbH**

**W-3413 Moringen(DE)**

(72) Erfinder: **Meylahn, Gerd-Uwe, Dr.**
**Hechtsprung 7**
**O-1501 Gross-Glienecke(DE)**

(74) Vertreter: **Rehberg, Elmar, Dipl.-Ing.**
**Postfach 3162 Am Kirschberge 22**
**W-3400 Göttingen(DE)**

(54) **Verfahren und Biofilmreaktoren zur biologischen Behandlung von organisch belastetem Abwasser.**

(57) Bei einem Verfahren zur biologischen Behandlung von organisch belastetem Abwasser (4) wird das Abwasser (4) von unten durch einen gestreckt ausgebildeten und vertikal ausgerichteten Reaktionsbehälter (2) geführt. Dies erfolgt mit einer derartigen Geschwindigkeit, daß sich aus Biofilm-Träger-Teilchen (3), deren spezifische Masse zwischen 1,1 und 1,6 kg/dm$^3$ beträgt, eine Schwebschicht (5) bildet. Solche Biofilm-Träger-Teilchen (3), die in dem Reaktionsbehälter (2) eine vorgegebene Steighöhe erreicht haben, werden von aufgewachsener Biomasse gereinigt.

Fig. 1

EP 0 486 748 A1

Die Erfindung bezieht sich auf ein Verfahren zur biologischen Behandlung von organisch belastetem Abwasser. Gleichzeitig befaßt sie sich mit Biofilmreaktoren zur Durchführung des Verfahrens.

Organisch belastetes Abwasser ist nach gründlicher mechanischer Reinigung zwar klar, es weist jedoch unter anderem noch hohe Ammonium- bzw. Ammoniakkonzentrationen auf. Diese müssen unbedingt beseitigt werden, wenn das Abwasser beispielsweise aus einer Fischproduktionsanlage entstammt und in dieser wieder Verwendung finden soll. Durch aerobe Bakterien läßt sich Ammonium bzw. Ammoniak zu Nitrit und dann zu Nitrat umsetzen. Während Ammonium bzw. Ammoniak eine für Fische giftige Substanz darstellt, ist Nitrat in der Regel als ungiftig anzusehen. Mit Hilfe anaerober Bakterien ist ergänzend die Umwandlung von Nitrat in molekularen Stickstoff möglich. Diese Umwandlung ist ihrerseits wiederum ein wesentlicher Schritt der Trinkwasseraufbereitung. Alle drei hier genannten Umwandlungsschritte vom Ammonium bzw. Ammoniak zum Nitrit, vom Nitrit zum Nitrat und vom Nitrat zum Stickstoff lassen sich durch vergleichbare Maßnahmen initiieren bzw. fördern. Für die jeweils notwendigen Bakterien sind Anlagerungsmöglichkeiten vorzusehen, an denen das organisch belastete Abwasser vorbeigeführt wird. Die ersten beiden Umwandlungen lassen sich zudem durch Sauerstoffzugabe fördern, während für die Letzte Sauerstofffreiheit notwendig ist, die nur (unter Sauerstoffabschluß) nach vorherigem Sauerstoffverbrauch zu erzielen ist.

Aus der DD-A-268 232 ist ein gestreckt ausgebildeter und vertikal angeordneter Reaktionsbehälter bekannt, durch den das organisch belastete Abwasser nach Durchlaufen einer ersten biologischen Behandlungsstufe von unten hindurchgeführt wird. In dem Reaktionsbehälter sind zwei verschiedene Typen von Biofilm-Träger-Teilchen vorgesehen. Der erste Typ weist eine Dichte größer als 1 kg/dm$^3$, vorzugsweise 1,1 bis 1,3 kg/dm$^3$, auf, während der zweite durch eine Dichte kleiner als 1 kg/dm$^3$, vorzugsweise kleiner 0,3 kg/dm$^3$, gekennzeichnet ist. Der erste Typ von Biofilm-Träger-Teilchen bildet im unteren Bereich des Reaktionsbehälters eine Schwebeschicht aus. Der zweite Typ von Biofilter-Träger-Teilchen schwimmt auf dem Abwasser in Reaktionsbehälter aus und bildet so ein schwimmendes Festbett aus. Für die Reinigung des zweiten Typs von Biofilm-Träger-Teilchen im Festbett ist ein Strahlapparat vorgesehen. Dieser saugt von den Biofilm-Träger-Teilchen aufgewachsene Biomasse ab. Für eventuell mitgerissene Biofilm-Träger-Teilchen ist eine Waschvorrichtung im Anschluß an den Strahlapparat vorgesehen, von der aus die gereinigten Biofilm-Träger-Teilchen in das schwimmende Festbett zurückgeführt werden. Der Bodenbereich des Reaktionsbehälters ist zur Verstärkung der Strömung nach unten spitz zulaufend ausgebildet, wobei ein Zuführrohr für das Abwasser mit einer Öffnung gegen den Bodenbereich gerichtet ist. Mit diesem bekannten Biofilmreaktor lassen sich zwei Behandlungsschritte auf einmal durchführen. An den beiden Typen von Biofilm-Träger-Teilchen lagern sich jeweils unterschiedliche Bakterien an. Vorteilhaft ist auch, daß durch die kontinuierliche Reinigung des zweiten Typs von Biofilm-Träger-Teilchen im schwimmenden Festbett gleichbleibende Bedingungen vorliegen. Als nachteilig stellt sich jedoch heraus, daß innerhalb der von dem ersten Typ von Biofilm-Träger-Teilchen gebildeten Schwebschicht mit dem Aufwachsen von Biomasse veränderliche Behandlungsbedingungen für das Abwasser vorliegen. Der Wirkungsgrad des Biofilmreaktors ist demgemäß über der Zeit nicht konstant. Auch die Integration der vorgeschalteten biologischen Behandlungsstufe in den Reaktionsbehälter ergibt eine insgesamt recht aufwendige Vorrichtung, bei der zwar alle drei möglichen Behandlungsschritte gleichzeitig ablaufen, sich jedoch kein konstanter Wirkungsgrad einstellt oder einstellen läßt.

Aus der DD-A-238 373 ist ein Verfahren zur biologischen Denitrifikation und ein Biofilmreaktor zu dessen Durchführung bekannt. Der Biofilmreaktor weist hier ebenfalls einen gestreckt ausgebildeten und vertikal ausgerichteten Reaktionsbehälter auf, durch den das organisch belastete Abwasser von unten hindurchgeführt wird. Innerhalb des Reaktionsbehälters sind als Biofilm-Träger-Teilchen Abfallprodukte der Braunkohlenschwelkoksvergasung, sogenannte Winkler-Generatorenaschen oder Winkler-Generatorstäube, vorgesehen. Diese bilden eine Schwebschicht, wobei eine bestimmte Steiggeschwindigkeit bzw. damit auch Steighöhe einer bestimmten Schichtdicke der auf den Biofilm-Träger-Teilchen aufgewachsenen Biomasse entspricht. Dies beruht darauf, daß durch die aufgewachsene Biomasse sowohl die mittlere spezifische Masse der Biofilm-Träger-Teilchen absinkt, als auch ihr Strömungswiderstand in dem Abwasser relativ anwächst. Bei diesem bekannten Biofilmreaktor zweigt seitlich von dem Reaktionsbehälter eine Ableitung für aufgestiegene Biofilm-Träger-Teilchen ab. Sobald die Biofilm-Träger-Teilchen innerhalb des Reaktionsbehälters bis auf Höhe der Ableitung angestiegen sind, werden sie durch die Ableitung aus dem Reaktionsbehälter ausgesondert und einer Endlagerung zugeführt. Auf diese Weise werden Biofilm-Träger-Teilchen, die durch aufgewachsene Biomasse weitgehend inaktiviert sind, aus dem Reaktionsbehälter entfernt. Hierdurch wird jedoch der Wirkungsgrad des Biofilmreaktors nicht stabilisiert, da die Anzahl der Biofilm-Träger-Teilchen innerhalb des Reaktionsbehälters ständig abnimmt. Außerdem sind die ausgesonderten Biofilm-Träger-Teilchen von Zeit zu Zeit durch neue zu ersetzen, so daß kein kontinuierlicher Betrieb des Biofilmreaktors möglich ist. Letztlich ist zu beachten, daß eine Endlagerungsmöglichkeit für die ausgesonderten Biofilm-Träger-Teilchen vorzusehen ist.

Der Erfindung liegt die Aufgabe zugrunde ein Verfahren zur biologischen Behandlung von organisch belastetem Abwasser aufzuzeigen, daß einen konstanten Wirkungsgrad aufweist und dessen Durchführung kontinuierlich möglich ist. Weiterhin sollen die bekannten Biofilmreaktoren zur Durchführung des neuen Verfahrens weiterentwickelt werden.

Die Aufgabe wird durch ein Verfahren zur biologischen Behandlung von organisch belastetem Abwasser, bei dem das Abwasser von unten durch einen gestreckt ausgebildeten und vertikal ausgerichteten Reaktionsbehälter mit einer derartigen Geschwindigkeit hindurchgeführt wird, daß sich aus Biofilm-Träger-Teilchen, deren spezifische Masse zwischen 1,1 und 1,6 kg/dm$^3$ beträgt, eine Schwebschicht bildet, und bei dem solche Biofilm-Träger-Teilchen, die in dem Reaktionsbehälter eine vorgegebene Steighöhe erreicht haben, von aufgewachsener Biomasse gereinigt werden, gelöst. Auf diese Weise wird ein kontinuierlicher Kreislauf für die Biofilm-Träger-Teilchen geschaffen. Nach der Anlagerung der für den jeweiligen Umwandlungsschritt notwendigen Bakterien, welche bei günstigen Randbedingungen von allein erfolgt, wächst langsam Biomasse auf den Biofilm-Träger-Teilchen auf, wobei sie in dem Reaktionsbehälter kontinuierlich aufsteigen. Beim Erreichen der vorgegebenen Steighöhe, daß heißt auch, einer entsprechenden Biomassendicke werden die Biofilm-Träger-Teilchen von der aufgewachsenen Biomasse gereinigt. Hierdurch gelangen sie wieder in den Anfangszustand vor dem Aufwachsen der Biomasse, der einer geringen Steighöhe entspricht. Nach einer relativ kurzen Anlaufphase stellt sich bei dem neuen Verfahren ein konstanter Wirkungsgrad ein. Der damit erreichte Endzustand ist durch eine weitgehend gleichbleibende Biomassenverteilung auf den Biofilm-Träger-Teilchen gekennzeichnet. Jedes einzelne Biofilm-Träger-Teilchen steigt mit der Zeit innerhalb des Reaktionsbehälters auf und startet nach der Reinigung erneut von unten. Die spezifische Masse der Biofilm-Träger-Teilchen von 1,1 bis 1,6 kg/dm$^3$ erlaubt die Führung des Abwassers durch den bzw. mehrere Reaktionsbehälter mittels einer Pumpe mit einem nur geringen bis mäßigen Leistungserfordernis. In Abhängigkeit von der spezifischen Masse der Biofilm-Träger-Teilchen ist die Geschwindigkeit des Abwassers in dem Reaktionsbehälter zu wählen. Hierbei ist gleichzeitig auch eine Mindestaufenthaltszeit des Abwassers in dem Reaktionsbehälter, die für den Ablauf der gewünschten biologischen Reaktionen notwendig ist, zu berücksichtigen. Bei Anwendung des neuen Verfahrens für die Salzwasserfischzucht ist die spezifische Masse der Biofilm-Träger-Teilchen an die erhöhte Dichte des Salzwassers anzupassen.

Die Biofilm-Träger-Teilchen, die die vorgegene Steighöhe erreicht haben, können mit Abstreifbürsten mechanisch gereinigt werden. Es stellt sich als realativ einfach heraus, die Biofilm-Träger-Teilchen konventionell mit Hilfe von Abstreifbürsten mechanisch zu reinigen. Zu diesem Zweck können beispielsweise kontinuierlich umlaufende Abstreifbürsten im oberen Bereich des Reaktionsbehälters vorgesehen sein. Die von den Biofilm-Träger-Teilchen entfernte Biomasse verläßt gemeinsam mit dem behandelten Abwasser den Reaktionsbehälter. Die Biomasse läßt sich, sofern dies notwendig oder gewünscht ist, durch eine nachgeschaltete Reinigung, beispielsweise in einem Absetzbecken problemlos entfernen. Die Biofilm-Träger-Teilchen sinken nach der Reinigung in dem Reaktionsbehälter abwärts, bis sie nach dem erneuten Aufwachsen von Biomasse wieder aufsteigen.

Die Biofilm-Träger-Teilchen, die die vorgegebene Steighöhe erreicht haben, können vor oder nach ihrer Reinigung aus dem Reaktionsbehälter ausgesondert und gereinigt dem organisch belasteten Abwasser wieder zugesetzt werden. Wenn die Biofilm-Träger-Teilchen im oberen Bereich des Reaktionsbehälters gereinigt werden und anschließend absinken, führen sie hierbei eine Bewegung aus, die den mit wachsender Biomassendicke aufsteigenden Biofilm-Träger-Teilchen entgegenläuft. Dies ist unter anderem mit einer nicht mehr direkt möglichen Zuordnung von aktueller Steighöhe und aufgewachsener Biomasse bei den Biofilm-Träger-Teilchen verbunden. Günstigere Verhältnisse ergeben sich, wenn die Biofilm-Träger-Teilchen, die die vorgegebene Steighöhe erreicht haben, entweder vor oder erst nach ihrer Reinigung aus dem Reaktionsbehälter ausgesondert werden und in jedem Fall dem organisch belasteten Abwasser in gereinigtem Zustand wieder zugesetzt werden. Dies kann direkt im unteren Bereich des Reaktionsbehälters oder auch schon vor diesem erfolgen. Hierdurch entsteht ein echter, auch räumlich vorhandener Kreislauf für die Biofilm-Träger-Teilchen, der die besten Voraussetzungen für einen stabilen und konstanten Wirkungsgrad des Verfahrens bietet.

Die Biofilm-Träger-Teilchen, die die vorgegebene Steighöhe erreicht haben, können aus dem Reaktionsbehälter ausgesondert und dem organisch belasteten Abwasser vor dem Reaktionsbehälter wieder zugesetzt werden, wobei das organisch belastete Abwasser mit den zugesetzten Biofilm-Träger-Teilchen unter Ausbildung einer turbulenten Strömung in den Reaktionsbehälter eingebracht wird, wodurch die zugesetzten Biofilm-Träger-Teilchen gereinigt werden. Die Reinigung der Biofilm-Träger-Teilchen durch eine turbulente Strömung erfordert keinerlei mechanische Vorrichtung und ist aus diesem Grund bei der kontinuierlichen Verfahrensführung bezüglich der Störanfälligkeit besonders vorteilhaft. Hierbei stellt es keinen Nachteil dar, daß die ausgewachsene Biomasse im unteren Bereich des Reaktionsbehälters von den Biofilm-Träger-Teilchen getrennt wird. Die abgelöste Biomasse wird von dem Abwasser mitgeführt und lagert sich nicht erneut an einem Biofilm-Träger-Teilchen an. In diesem Zusammenhang ist auch zu berücksichtigen, daß die anfallende Biomasse nur einen geringen Umfang aufweist. Beim Behandeln von Abwässern innerhalb einer geschlossenen Fischzuchtanlage fallen beispielsweise etwa 0,5 l Schlamm pro m$^3$ Reaktionsbehältervolumen und Tag an.

Biofilm-Träger-Teilchen mit einem Durchmesser von etwa 2 - 3 mm und einer spezifischen Masse von ca. 1,15 kg/dm$^3$, die mechanisch beanspruchbar sowie physiologisch unbedenklich sind und eine vorzugsweise rauhe Oberfläche aufweisen, können verwendet werden. Diese Spezifikationen der Biofilm-Träger-Teilchen beinhalten eine weitgehende Optimierung des neuen Verfahrens. Bei einem Durchmesser von ca. 2,5 mm ist die biologisch reaktive Oberfläche der Biofilm-Träger-Teilchen im Vergleich zu dem von ihnen eingenommenen Volumen hinreichend groß. Andererseits erfolgt aber auch zuverlässig ihr Aufsteigen innerhalb des Reaktionsbehälters mit dem Aufwachsen von Biomasse. Hierzu trägt auch die spezifische Masse von ca. 1,15 kg/dm$^3$ bei. Für die Durchführung des neuen Verfahrens im Rahmen einer Salzwasserfischzuchtanlage wäre dieser Wert der höheren Dichte des Salzwassers entsprechend anzupassen. Um eine Beschädigung der Biofilm-Träger-Teilchen bei der Reinigung möglichst weitgehend zu vermeiden, ist es angebracht, diese mechanisch beanspruchbar auszuführen. Da ein gewisser Abrieb in keinem Fall zu vermeiden sein dürfte, sollte das Material der Biofilm-Träger-Teilchen in jedem Fall physiologisch unbedenklich sein. Eine rauhe Oberfläche der Biofilm-Träger-Teilchen erleichtert die Anlage der gewünschten Bakterien sowie der von diesen gebildeten Biomasse. Eine rauhe Oberfläche ist jedoch für die erfolgreiche Durchführung des neuen Verfahrens nicht zwingend erforderlich. Beispielsweise lassen sich auch Biofilm-Träger-Teilchen aus PVC erfolgreich verwenden, die durch eine weitgehend glatte Oberfläche ausgezeichnet sind. Die Form der Biofilm-Träger-Teilchen spielt für die erfolgreiche Durchführung des Verfahrens nur eine sehr untergeordnete Rolle. Beispielsweise sind kugel-, zylinder- und linsenförmige Biofilm-Träger-Teilchen gut geeignet.

Biofilm-Träger-Teilchen aus mit Kreide versetztem Polystyrol können verwendet werden. Dieses Material erfüllt in einfacher Weise die oben aufgelisteten Anforderungen. Über den Kreideanteil läßt sich die spezifische Masse des Polystyrols in vorteilhafter Weise einstellen. Gleichzeitig ist die Kreide für eine angerauhte Oberfläche des Polystyrols ursächlich.

Bei einem Biofilmreaktor zur Durchführung des neuen Verfahrens mit einem gestreckt ausgebildeten, vertikal ausgerichteten Reaktionsbehälter, der einen unteren Einlaß für das organisch belastete sowie einen oberen Auslaß für das behandelte Wasser aufweist und zur Aufnahme von Biofilm-Träger-Teilchen bestimmt ist, und einer Reinigungsvorrichtung im oberen Bereich des Reaktionsbehälters besteht die erfinderische Lösung darin, daß als Reinigungsvorrichtung ein drehbares, Abstreifbürsten tragendes Flügelrad vorgesehen ist, dem als Antrieb mindestens eine Wasserstrahldüse zugeordnet ist. Das Abstreifbürsten tragende Flügelrad entfernt die Biomasse von den Biofilm-Träger-Teilchen, die bis in seine Reichweite aufgestiegen sind. Die dem Flügelrad als Antrieb zugeordnete Wasserstrahldüse dient gleichzeitig ebenfalls als Reinigung für die Biofilm-Träger-Teilchen und spült zumindest die abgelöste Biomasse weg. Der Einsatz des Abstreifbürsten tragenden Flügelrads ist unkompliziert, ebenso sein Antrieb über die Wasserstrahldüse. Im Stand der Technik war der Einsatz einer derartigen Reinigungsvorrichtung weder vorgesehen noch möglich, da dort die Reinigungsvorrichtungen ausschließlich für ein aufschwimmendes Festbett vorgesehen waren.

Bei einem weiteren Biofilmreaktor zur Durchführung des neuen Verfahrens mit einem gestreckt ausgebildeten, vertikal ausgerichteten Reaktionsbehälter, der einen unteren Einlaß für das organisch belastete sowie einen oberen Auslaß für das behandelte Abwasser aufweist und zur Aufnahme von Biofilm-Träger-Teilchen bestimmt ist, und einer seitlich von dem Reaktionsbehälter abzweigenden Ableitung für aufgestiegene Biofilm-Träger-Teilchen besteht die erfinderische Lösung darin, daß der Reaktionsbehälter einen spitz zulaufenden Bodenbereich aufweist, daß ein bis in den Reaktionsbehälter hineinragendes Zuführrohr für das organisch belastete Abwasser mit einer gegen den Bodenbereich gerichteten Öffnung des unteren Einlaß bildet, und daß die Ableitung in Form eines Injektors in das Zuführrohr mündet. Bei diesem Biofilmreaktor kann ganz auf mechanisch bewegte Teile verzichtet werden. Dadurch wird ein hoher Grad an Zuverlässigkeit erreicht. Dennoch erfolgt die Reinigung der Biofilm-Träger-Teilchen, die eine vorgegebene Steighöhe innerhalb des Reaktionsbehälters erreicht haben, in dem notwendigen Umfang. Die hierzu verwandte turbulente Strömung wird durch die Anordnung des Zuführrohrs für das organisch belastete Abwasser gegenüber dem spitz zulaufenden Bodenbereich des Reaktionsbehälters erreicht. Die mit dieser Ausformung des Bodenbereichs einhergehende Querschnittsverringerung führt zu einer dort ausgeprägt hohen Strömungsgeschwindigkeit, die ursächlich für den Reinigungseffekt der dem Abwasser zugesetzten Biofilm-Träger-Teilchen ist. Das Zusetzen der aus dem Reaktionsbehälter ausgesonderten Biofilm-Träger-Teilchen erfolgt mit Hilfe eines Injektors. Dieser wird von dem Zuführrohr für das Abwasser und der in dieses hineinmündenden Ableitung für die Biofilm-Träger-Teilchen gebildet. Die Saugwirkung des Injektors wird auch zur Aussonderung der Biofilm-Träger-Teilchen genutzt, die die vorgegebene Steighöhe innerhalb des Reaktionsbehälters erreicht haben. Diese Steighöhe entspricht der Stelle, an der die Ableitung von dem Reaktionsbehälter abzweigt.

Ein oberer Abschnitt des Reaktionsbehälters kann durchsichtig ausgebildet sein. Zur Einstellung des neuen Biofilmreaktors wird sinnvollerweise beobachtet, ob nach einer Betriebszeit, die üblicherweise zum Aufwachsen der maximal gewünschten Biomassendicke auf die Biofilm-Träger-Teilchen ausreicht, die ersten Biofilm-Träger-Teilchen die vorgegebene Steighöhe erreicht haben. Ist dies nicht der Fall, muß die Strömungsgeschwindigkeit des Abwassers durch den Reaktionsbehälter entsprechend erhöht werden. Erfolgt das Erreichen der vorgegebenen Steighöhe hingegen zu früh, so ist die Geschwindigkeit des Abwassers entsprechend zu reduzieren. Hieraus ergibt sich zwangsläufig, daß die neuen Biofilmreaktoren für schwankende Durchsatzmengen an Abwasser weniger geeignet sind. Idealerweise werden sie für einen vorgegebenen Abwasserdurchsatz dimensioniert und führen bei diesem zu einem exzellenten Wirkungsgrad bei einem geringen Raumbedarf und niedrigen Unterhaltungskosten. Eine Reihen- oder Parallelschaltung mehrerer Reaktoren ist ohne zusätzliche Pumpen problemlos möglich.

Das Zuführrohr kann einen Druckluftanschluß aufweisen. Für sicherlich selten notwendige, aber vielleicht von Zeit zu Zeit doch durchzuführende Reinigungen des gesamten Biofilmreaktors ist es sinnvoll, dem Zuführrohr einen Druckluftanschluß aufzuweisen. Druckluft ist als Reinigungsmedium für Biofilmreaktoren und gleichartige Vorrichtungen aus dem Stand der Technik bekannt.

Die Erfindung wird im Folgenden anhand von Ausführungsbeispielen näher erläutert und beschrieben. Es zeigt:

Figur 1     eine erste Ausführungsform eines Biofilmreaktors zur Durchführung des Verfahrens zur biologischen Behandlung von organisch belastetem Wasser,

Figur 2     eine Ausführungsform eines zweiten Biofilmreaktor zur Durchführung des Verfahrens zur biologischen Behandlung von organisch belastetem Abwasser,

Figur 3     das Blockschaltbild einer Fischzuchtanlage als Anwendungsbeispiel für das Verfahren zur biologischen Behandlung von organisch belastetem Abwasser.

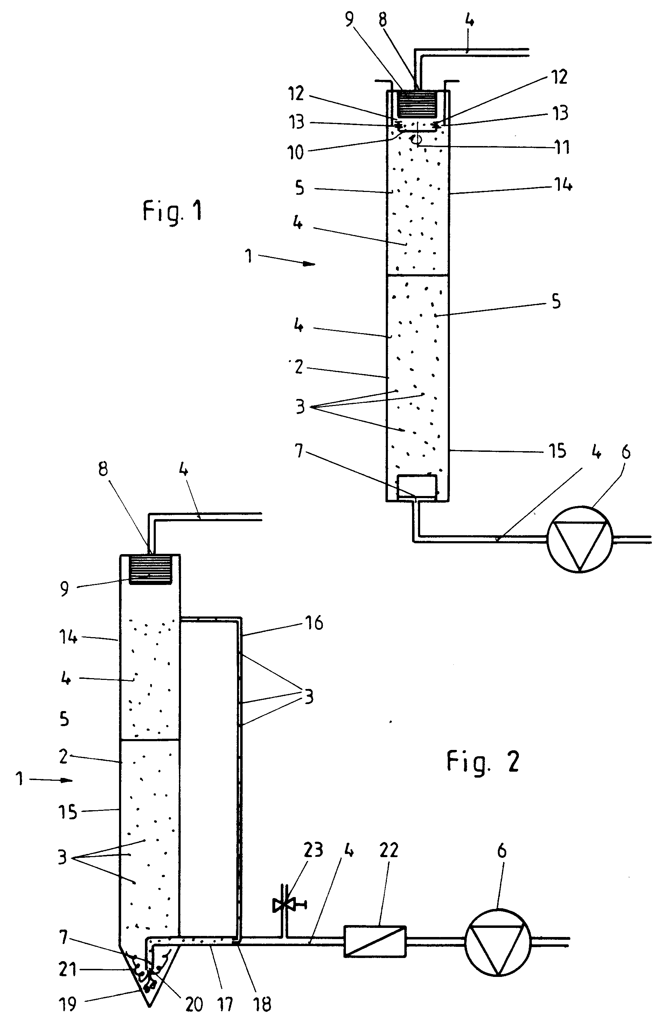

Der in Figur 1 dargestellte Biofilmreaktor 1 weist einen gestreckt ausgebildeten, vertikal ausgerichteten Reaktionsbehälter 2 auf. Der Reaktionsbehälter 2 ist zur Aufnahme von Biofilm-Träger-Teilchen 3 bestimmt. Die Biofilm-Träger-Teilchen 3 bestehen aus mit Kreide versetztem Polystyrol, dessen spezifische Masse etwa 1,15 kg/dm$^3$ beträgt. Die Oberfläche der Biofilm-Träger-Teilchen ist durch den Kreidezusatz angerauht, so daß sich hier leicht Bakterien anlagern können. Die Form der Biofilm-Träger-Teilchen ist nahezu beliebig, während ihre maximalen Abmessungen etwa 2 bis 3 mm betragen sollten. Hier sind Biofilm-Träger-Teilchen 3 in Kugelform mit einem Durchmesser von 2,5 mm vorgesehen. Die Biofilm-Träger-Teilchen 3 bilden in durch den Reaktionsbehälter 2 geführtem organisch belastetem Abwasser 4 eine Schwebschicht 5. Für die Führung des Abwassers 4 ist eine Pumpe 6 dem Biofilmreaktor 1 vorgeschaltet. Von der Pumpe 6 gelangt das Abwasser 4 durch einen unteren Einlaß 7 mit Rückhaltevorrichtung in den Reaktionsbehälter 2. Nach Kontakt mit den Biofilm-Träger-Teilchen 3 verläßt das Abwasser 4 den Reaktionsbehälter 2 durch einen oberen Auslaß 8 und ein diesem vorgeschaltetes Lamellensieb 9. An den Biofilm-Träger-Teilchen 3 lagern sich zuerst im Abwasser 4 enthaltene Bakterien an. Der Typus der Bakterien, der hierbei vornehmlich auftritt, hängt von dem Zustand des Abwassers 4 ab. Ist das Abwasser 4 mit Ammonium bzw. Ammoniak belastet und hinreichend sauerstoffhaltig, lagern sich an den Biofilm-Träger-Teilchen 3 aerobe Bakterien (Nitrosomonas, Nitrobacter) ab, die Ammonium bzw. Ammoniak zu Nitrit umwandeln. In nitrithaltigem Abwasser 4 wandeln die an den Biofilm-Träger-Teilchen 3 angelagerten Bakterien Nitrit zu Nitrat um. Bei sauerstoffarmem, nitrathaltigem Abwasser 4 ist die Umwandlung des Nitrats durch anaerobe Bakterien zu Stickstoff möglich. In jedem Fall wächst mit der erfolgenden Bioreaktion Biomasse auf den Biofilm-Träger-Teilchen 3 auf. Hierdurch wird die spezifische Masse der Biofilm-Träger-Teilchen 3 und auch ihr relativer strömungswiderstand erhöht. Auf diese Weise bestimmt die auf einem einzelnen Biofilm-Träger-Teilchen aufgewachsene Biomasse die Steiggeschwindigkeit des Biofilm-Träger-Teilchens und damit auch seine relative Steighöhe gegenüber den anderen Biofilm-Träger-Teilchen 3 innerhalb der Schwebschicht 5. Sobald auf den einzelnen Biofilm-Träger-Teilchen 3 eine gewissen Menge Biomasse aufgewachsen ist, steigt es innerhalb des Reaktionsbehälters 2 bis in den Bereich eines Flügelrades 10 auf. Das Flügelrad 10 ist um eine Achse 11 drehbar gelagert und trägt Abstreifbürsten 12. Als Antrieb sind dem Flügelrad 10 Wasserstrahldüsen 13 zugeordnet. Die in den Bereich des Flügelrads 10 aufgestiegenen Biofilm-Träger-Teilchen 3 werden durch die bewegten Abstreifbürsten 12 von aufgewachsener Biomasse gereinigt. Die Wasserstrahldüsen 13 dienen in diesem Zusammenhang nicht nur zum Antrieb des Flügelrads 10 sondern auch als Hilfsmittel bei der Reinigung der Biofilm-Träger-Teilchen, in dem sie die abgelöste Biomasse wegspülen. Die von den Biofilm-Träger-Teilchen 3 entfernte Biomasse verläßt mit dem Abwasser 4 den Reaktionsbehälter 2 durch den Auslaß 8 bzw. das Lamellensieb 9. Die gereinigten Biofilm-Träger-Teilchen 3 sinken, da sie nun wieder eine relativ große spezifische Masse und einen geringen relativen Strömungswiderstand aufweisen, innerhalb des Reaktionsbehälters 2 herab. Beim Betrieb des Biofilmreaktors 1 liegt nach einer gewissen Einlaufphase ein über der Zeit konstanter Wirkungsgrad vor. Die Biofilm-Träger-Teilchen 3 weisen dann eine gleichbleibende mittlere Schichtdicke der aufgewachsenen Biomasse auf. Zu jeder Zeit wird genausoviel Biomasse mit dem Abwasser 4 aus dem Reaktionsbehälter 2 herausgeführt wie in diesem auf den Biofilm-Träger-Teilchen 3 anwächst. Die Mengen der von dem Biofilmreaktor 1 ausgestoßenen Biomasse sind jedoch in der Regel sehr gering, so daß in vielen Fällen auf eine Nachreinigung verzichtet werden kann. Beispielsweise fällt bei dem Betrieb in einem geschlossenen Wasserkreislauf einer Fischzuchtanlage pro $m^3$ Reaktionsbehältervolumen und Tag nur ein halber Liter Schlamm an. Die Einstellung des Biofilmreaktors 1 erfolgt nach der Maßgabe, daß die Förderleistung nach der Pumpe 6 gerade so groß ist, daß die durch aufgewachsene Biomasse inaktiv werdenden Biofilm-Träger-Teilchen 3 in den Bereich des Flügelrads 10 gelangen. Dort werden sie von der Biomasse gereinigt und dadurch reaktiviert. Die Einstellung des Biofilmreaktors 1 wird dadurch erleichtert, daß ein oberer Abschnitt 14 des Reaktionsbehälters 2 aus durchsichtigem Acrylglas gefertigt ist. Ein unterer Abschnitt 15 ist hingegen aus Metall gearbeitet, um den dort auftretenden größeren hydrostatischen Drücken widerstehen zu können. Vorteilhaft bei dem neuen Biofilmreaktor 1 und dem mit ihm durchzuführenden Verfahren ist, daß nach einmaliger Einstellung ein konstanter Wirkungsgrad bei der Behandlung von organisch behandeltem Abwasser vorliegt und dieser über lange Zeit, ohne notwendige äußere Manipulationen erhalten bleibt. Hierfür ist im Vergleich zu anderen Verfahren, die auf Riesel- bzw. Tropfkörpern oder Belebtschlammkulturen aufbauen, nur ein geringer Platzbedarf vorhanden.

Der in Figur 2 dargestellte Biofilmreaktor 1 unterscheidet sich von dem Biofilmreaktor 1 gemäß Figur 1 im wesentlichen durch die Art der Reinigung, die für die Biofilm-Träger-Teilchen 3 beim Erreichen einer vorgegebenen Steighöhe vorgesehen ist. Von dem Reaktionsbehälter 2 zweigt eine Ableitung 16 ab, mit deren Hilfe alle die Biofilm-Träger-Teilchen 3 aus dem Reaktionsbehälter 2 ausgesondert werden, die bis in die Höhe der Abzweigung aufgestiegen sind. Die Ableitung 16 mündet in ein Zuführrohr 17 für das Abwasser 4 unter Ausbildung eines Injektors 18. Das durch die Pumpe 6 in den Biofilmreaktor 1 geführte Abwasser 4 reißt hierbei den Inhalt der Ableitung 16 samt der Biofilm-Träger-Teilchen 3 mit. Der Bodenbereich 19 des Reaktionsbehälters 2 bzw. dessen unteren Abschnitts 15 ist nach unten spitz zulaufend ausgebildet, wobei das Zuführrohr 17 für das Abwasser 4 bis in den Reaktionsbehälter 2 hineinragt und mit einer gegen den Bodenbereich 19 gerichteten Öffnung 20 den unteren Einlaß 7 bildet. Die Querschnittverengung im Bodenbereich 16 und die Ausrichtung des das Abwasser 4 in den Behälter 2 einführenden Zuführrohrs 17 begünstigen die Ausbildung einer turbulenten Strömung 21 innerhalb des Bodenbereichs 19. Diese turbulente Strömung 21 bewirkt eine Reinigung der vom Abwasser 4 mitgeführten Biofilm-Träger-Teilchen 3. Vorteilhaft sind hierzu keine mechanischen Vorrichtungen notwendig. Sinnvollerweise ist das Material der Biofilm-Träger-Teilchen 3 so auszuwählen, daß diese den Belastungen unter anderem bei Zusammenstößen mit der Wandung des Bodenbereichs 19 widerstehen. Biofilm-Träger-Teilchen 3 aus mit Kreide versetztem Polystyrol werden dieser Anforderung gerecht. Die durch die turbulente Strömung 21 abgelöste Biomasse lagert sich nicht erneut innerhalb des Reaktionsbehälters 2 an Biofilm-Träger-Teilchen 3 ab. Sie verläßt gemeinsam mit dem Abwasser 4 durch das Lamellensieb 9 den Biofilmreaktor 1. Das Lamellensieb 9 dient nur der Aufgabe, "verirrte" Biofilm-Träger-Teilchen 3 in dem Reaktionsbehälter 2 zurückzuhalten. Mit dem Biofilmreaktor 1 gemäß Figur 2 ist der große Vorteil verbunden, daß die Biofilm-Träger-Teilchen 3 in einen echten Kreislauf geführt werden. Sie müssen nicht entgegen ihrer Aufsteigrichtung beim Aufwachsen von Biomasse nach dem Reinigen innerhalb des Reaktionsbehälters 2 absinken. So entspricht die in dem Reaktionsbehälter 2 vorliegende Steighöhenverteilung der Biofilm-Träger-Teilchen 3 in jedem Fall auch der auf ihnen aufgewachsenen Biomasse. Auf diese Weise kann das Prinzip, daß die Biofilm-Träger-Teilchen 3, die die meiste aufgewachsene Biomasse aufweisen, gereinigt und im gereinigten Zustand für erneute biologische Reaktionen zur Verfügung gestellt werden, besonders zuverlässig realisiert werden. Hiermit ist eine exzellente Einhaltung des angestrebten Wirkungsgrades des Biofilmreaktors 1 bei der Behandlung von organisch belastetem Abwasser 4 gewährleistet. An dieser Stelle sei jedoch nochmals darauf verwiesen, daß eine Einstellung des Biofilmreaktors 1 auf stark schwankende Durchsatzmengen von Abwasser 4 nicht vorgesehen ist. Vielmehr sollte das Volumen des Reaktionsbehälters 2 auf die anfallenden Mengen an Abwasser 4 abgestimmt werden. Die Pumpe 6 ist analog zu der Pumpe 6 gemäß Figur 1 so auszuregeln, daß die durch Aufwachsen von Biomasse weitgehend inaktiven Biofilm-Träger-Teilchen 3 innerhalb des Reaktionsbehälters 2 eine solche Steighöhe erreichen, die der abzweigenden Ableitung 16 entspricht. Zwischen der Pumpe 6 und dem Injektor 18 ist gemäß Figur 2 eine Rückschlagklappe 22 und ein Drucklustanschluß 23 vorgesehen, mit deren Hilfe eine gründliche Reinigung des Biofilmreaktors 1 möglich ist. Diese Reinigung wird jedoch nur relativ selten erforderlich sein. Das neue Verfahren läßt sich ohne Unterbrechungen kontinuierlich und langfristig durchführen, da beispielsweise keine verbrauchten Biofilm-Träger-Teilchen 3 zu ersetzen sind.

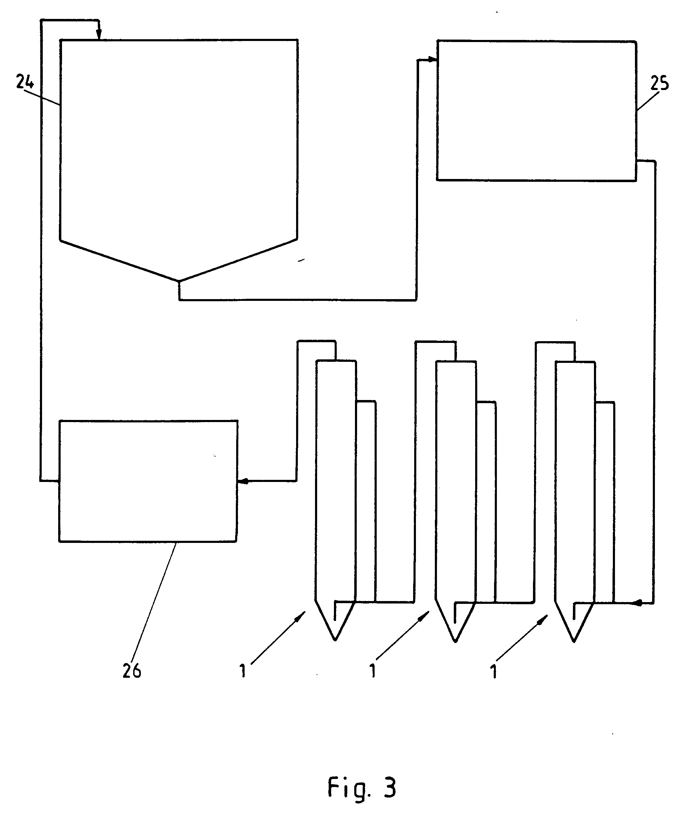

Figur 3 gibt in schematischer Darstellung einen geschlossenen Wasserkreislauf wieder, wie er bei Fischzuchtanlagen vorliegt. Das in einem Fischsilo 24 anfallende Abwasser wird zuerst einer mechanischen Reinigung 25 zugeführt. Im Anschluß daran erfolgt die biologische Behandlung des nur noch mit gelösten organischen Stoffen belasteten Abwassers. Hierzu sind in diesem Fall drei Biofilmreaktoren 1 gemäß Figur 2 hintereinander geschaltet vorgesehen. In dem ersten Biofilmreaktor 1 erfolgt der Abbau von fischgiftigem Ammonium bzw. Ammoniak zu Nitrit. Im zweiten Biofilmreaktor 1 wird das Nitrit in fischungiftiges Nitrat umgesetzt. Diese ersten beiden biologischen Behandlungsstufen bedienen sich aerober Bakterien. Im Anschluß erfolgt unter Verwendung anaerober Bakterien und der Nutzung des Umstandes, daß durch die vorangeschalteten Verfahrensstufen der Sauerstoff vollständig verbraucht wurde, die Umwandlung des Nitrats in Stickstoff. Dieser letzte biologische Behandlungsschritt kann bei Kalkzusatz zu dem Abwasser auch in Fortfall kommen. In jedem der Biofilmreaktoren 1 hält sich das organisch belastete Abwasser einige Minuten lang auf, um eine möglichst vollständige Reaktion der gewünschten Art zu ermöglichen. Günstig ist es, in jedem Biofilmreaktor für die dort gewünschten Bakterien besonders vorteilhafte Lebens- und Stoffwechselbedingungen zu schaffen. Dies kann durch eine gezielte Temperierung und/oder gezielte Zugabe von Nährstoffen bzw.

Stimulantien erfolgen. Im Anschluß an die Biofilmreaktoren 1 ist ein Konditionierung 26 für das aufbereitete Abwasser vorgesehen. Hier erfolgt eine Sauerstoffanreicherung, Temperierung und pH-Wert- Einstellung des Abwassers, bevor es als Frischwasser erneut in den Fischsilo 24 gelangt. Ein mechanisches Abfiltern der in den Biofilmreaktoren 1 anfallenden Biomasse ist in aller Regel nicht notwendig. Der in Figur 3 dargestellte Wasserkreislauf ist nahezu ohne die Zugabe von echtem Frischwasser (<5 %/d) betreibbar und stellt damit eine sehr umweltfreundliche Möglichkeit für die Fischproduktion dar.

**Patentansprüche**

1. Verfahren zur biologischen Behandlung von organisch belastetem Abwasser (4), bei dem das Abwasser (4) von unten durch einen gestreckt ausgebildeten und vertikal ausgerichteten Reaktionsbehälter (2) mit einer derartigen Geschwindigkeit hindurchgeführt wird, daß sich aus Biofilm-Träger-Teilchen (3), deren spezifische Masse zwischen 1,1 und 1,6 kg/dm$^3$ beträgt, eine Schwebschicht (5) bildet, und bei dem solche Biofilm-Träger-Teilchen (3), die in dem Reaktionsbehälter (2) eine vorgegebene Steighöhe erreicht haben, von aufgewachsener Biomasse gereinigt werden.

2. Verfahren nach Anspruch 1, dadurch gekennzeichnet, daß die Biofilm-Träger-Teilchen (3), die die vorgegebene Steighöhe erreicht haben, mit Abstreifbürsten (12) mechanisch gereinigt werden.

3. Vorrichtung nach Anspruch 1 oder 2, dadurch gekennzeichnet, daß die Biofilm-Träger-Teilchen (3), die die vorgegebene Steighöhe erreicht haben, vor oder nach ihrer Reinigung aus dem Reaktionsbehälter (2) ausgesondert und gereinigt dem Zulauf des organisch belasteten Abwassers (4) wieder zugesetzt werden.

4. Verfahren nach Anspruch 1, dadurch gekennzeichnet, daß die Biofilm-Träger-Teilchen (3), die die vorgegebene Steighöhe erreicht haben, aus dem Reaktionsbehälter (2) ausgesondert und dem organisch belasteten Abwasser (4) vor dem Reaktionsbehälter (2) wieder zugesetzt werden und daß das organisch belastete Abwasser (4) mit den zugesetzten Biofilm-Träger-Teilchen (3) unter Ausbildung einer turbulenten Strömung (21) in den Reaktionsbehälter (2) eingebracht wird, wodurch die zugesetzten Biofilm-Träger-Teilchen (3) gereinigt werden.

5. Verfahren nach einem der Ansprüche 1 bis 4, dadurch gekennzeichnet, daß Biofilm-Träger-Teilchen (3) mit einem Durchmesser von etwa 2 bis 3 mm und einer spezifischen Masse von ca. 1,15 kg/dm$^3$ verwendet werden, die mechanisch beanspruchbar sowie physiologisch unbedenklich sind und vorzugsweise eine rauhe Oberfläche aufweisen.

6. Verfahren nach Anspruch 6, dadurch gekennzeichnet, daß Biofilm-Träger-Teilchen (3) aus mit Kreide versetztem Polystyrol verwendet werden.

7. Biofilmreaktor zur Durchführung des Verfahrens nach Anspruch 2 mit einem gestreckt ausgebildeten, vertikal ausgerichteten Reaktionsbehälter, der einen unteren Einlaß für das organisch belastete sowie einen oberen Auslaß für das behandelte Abwasser aufweist und zur Aufnahme von Biofilm-Träger-Teilchen bestimmt ist und einer Reinigungsvorrichtung im oberen Bereich des Reaktionsbehälters, dadurch gekennzeichnet, daß als Reinigungsvorrichtung ein drehbares, Abstreifbürsten (12) aufweisendes Flügelrad (10) vorgesehen ist, dem als Antrieb mindestens eine Wasserstrahldüse (13) zugeordnet ist.

8. Biofilmreaktor zur Durchführung des Verfahrens nach Anspruch 4 mit einem gestreckt ausgebildeten, vertikal ausgerichteten Reaktionsbehälter, der einen unteren Einlaß für das organisch belastete sowie einen oberen Auslaß für das behandelte Abwasser aufweist und zur Aufnahme von Biofilm-Träger-Teilchen bestimmt ist, und einer seitlich von dem Reaktionsbehälter abzweigenden Ableitung für aufgestiegene Biofilm-Träger-Teilchen, dadurch gekennzeichnet, daß der Reaktionsbehälter (2) einen spitz zulaufenden Bodenbereich (19) aufweist, daß ein bis in den Reaktionsbehälter hineinragendes Zuführrohr (17) für das organisch belastete Abwasser (4) mit einer gegen den Bodenbereich (19) gerichteten Öffnung (20) den unteren Einlaß (7) bildet, und daß die Ableitung (16) in Form eines Injektors (18) in das Zuführrohr (17) mündet.

9. Biofilmreaktor nach Anspruch 7 oder 8, dadurch gekennzeichnet, daß ein oberer Abschnitt (14) des Reaktionsbehälters (2) durchsichtig ausgebildet ist.

10. Biofilmreaktor nach Anspruch 8 oder 9, dadurch gekennzeichnet, daß das Zuführrohr (17) einen Druckluftanschluß (23) aufweist.

Fig. 1

Fig. 2

Fig. 3

Europäisches
Patentamt

**EUROPÄISCHER RECHERCHENBERICHT**

Nummer der Anmeldung

EP 91 10 5364

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 009 099 (ECOLOTROL INC) <br> * Spalte 2; Ansprüche 1,2,10,11,13,16-18,22,23; Abbildungen * <br> * Spalte 6, Zeile 24 - Zeile 35 * <br> * Spalte 6, Zeile 64 - Zeile 68 * <br> * Spalte 9, Zeile 5 - Zeile 42 * <br> * Spalte 10, Zeile 7 - Zeile 36 * | 1,3,5 | C02F3/12 <br> C02F3/10 |
| A | --- | 7,10 | |
| X | EP-A-0 124 409 (L'AIR LIQUIDE) <br> * Seite 2, Zeile 23 - Seite 3, Zeile 20; Abbildung * <br> --- | 1,3,8 | |
| P,X | DE-U-9 016 202 (MEYLAHN, GERD-UWE) 28. März 1991 <br> * Seite 5 - Seite 7; Abbildung * <br> --- | 1,2,5,7, 8 | |
| A | EP-A-0 389 958 (PREUSSAG AG) <br> * Spalte 3, Zeile 46 - Spalte 4, Zeile 38; Abbildung * <br> --- | 1,3,4,8 | |
| A | FR-A-2 446 259 (DEGREMONT) <br> * Seite 2, Zeile 15 - Zeile 31 * <br> * Seite 5, Zeile 7 - Zeile 30; Abbildung 1 * <br> --- | 1,3-5,8 | **RECHERCHIERTE SACHGEBIETE (Int. Cl.5)** <br><br> C02F |
| A | US-A-3 779 906 (BIOSPHERICS INC) <br> * Spalte 8; Ansprüche 1,4,5 * <br> * Spalte 2, Zeile 62 - Spalte 3, Zeile 7 * <br> * Spalte 3, Zeile 64 - Zeile 67 * <br> --- | 1,6 | |
| A | DE-A-3 518 490 (WSW PLANUNGSGESELLSCHAFT GMBH) <br> * Seite 2; Anspruch 1 * <br> --- | 9 | |
| D,A | DD-A-238 373 (TECHNISCHE HOCHSCHULE "CARL SCHORLEMMER") <br> * Titelseite, Zusammenfassung * <br><br> ----- | 1,3 | |

Der vorliegende Recherchenbericht wurde für alle Patentansprüche erstellt

| Recherchenort | Abschlußdatum der Recherche | Prüfer |
|---|---|---|
| DEN HAAG | 28 FEBRUAR 1992 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)